# FASCICULE DE BREVET EUROPEEN

(11) **EP 0 851 026 B1**
(45) Date de publication et mention de la délivrance du brevet: **14.07.2004**
(21) Numéro de dépôt: 97402752.6
(22) Date de dépôt: 17.11.1997
(51) Int. Cl.: C12H 1/14, C12H 1/22, A23L 3/3409, A23L 3/3445

(54) **Procédé et dispositif d'inertage d'une cuve à liquide alimentaire, notamment à vin, et gaz d'inertage correspondant**
Verfahren und Einrichtung zum Einbringen eines Inertgases in einen Getränkebehälter, insbesondere für Wein, und das Inertgas für diesen Zweck
Process and apparatus for placing a beverage container e.g. wine container under inert atmosphere and inert gas therefore

(30) Priorité: 29.11.1996 FR 9614690
(43) Date de publication de la demande: 01.07.1998
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Gaubert, Guy, 33450 Saint Sulpice et Cameyrac (FR)
(74) Mandataire: Mellul-Bendelac, Sylvie Lisette

(56) Documents cités:
- EP-A- 0 667 204
- CH-A- 457 652
- DE-A- 2 744 767
- FR-A- 356 563
- FR-A- 928 053
- FR-A- 2 107 946
- FR-A- 2 516 483
- GB-A- 1 408 995
- DATABASE WPI Week 9117 Derwent Publications Ltd., London, GB; AN 91-120497 XP002114918 & JP 03 058778 A (NISHINOMIYA SHUZO), 13 mars 1991 (1991-03-13)
- DATABASE WPI Week 9117 Derwent Publications Ltd., London, GB; AN 91-120497 XP002039073 & JP 03 058778 A (NISHINIMIYA S.), 13 mars 1991 (1991-03-13)

## Description

La présente invention est relative à un procédé d'inertage d'une cuve contenant un liquide alimentaire, notamment du vin, du type dans lequel on injecte dans le ciel gazeux de la cuve un gaz d'inertage plus lourd que l'air, et, pendant cette injection, on évacue le gaz en excès par un orifice de purge de la cuve.

Dans la technique actuelle d'inertage des cuves à vin, le balayage gazeux s'effectue sur des cuves munies d'un orifice disponible pour l'arrivée de gaz, généralement un piquage latéral sur la cheminée de cuve, et d'un orifice de purge placé au centre de la trappe d'accès dans la cuve.

Dans ce cas, il est possible d'effectuer un balayage gazeux par dilution avec des gaz tels que l'azote ou un mélange azote/CO₂.

Cependant, cette technique ne donne pas entière satisfaction, car pour atteindre une teneur résiduelle en oxygène suffisamment basse (typiquement inférieure à 1%), il faut effectuer un balayage relativement long, consommant une quantité importante de gaz d'inertage. De plus, cette technique ne peut pas être mise en oeuvre lorsque la cuve est munie à sa partie supérieure d'une ouverture unique, ce qui est fréquent.

Une cuve ayant une ouverture unique et un ciel gazeux d'argon est connue de JP-A-3 058 778.

L'invention a pour but de permettre un inertage rapide, fiable et économique des cuves à vin, même munies d'une unique ouverture supérieure.

A cet effet, l'invention a pour objet un procédé selon la revendication 6.

Le procédé suivant l'invention peut comporter une ou plusieurs des caractéristiques suivantes :
- on réduit la vitesse de déplacement du gaz d'inertage au voisinage de la surface libre du liquide, juste avant son injection;
- on mesure la teneur en oxygène dans le ciel gazeux de la cuve, et on arrête l'injection lorsque cette teneur est inférieure ou égale à une valeur maximale prédéterminée;
- on utilise un gaz d'inertage contenant sensiblement 75 à 80% d'un gaz neutre, notamment d'argon, et le complément d'anhydride carbonique (CO₂).

L'invention a également pour objet un dispositif d'inertage d'une cuve à liquide alimentaire, notamment à vin, selon la revendication 1.

Le dispositif suivant l'invention peut comporter une ou plusieurs des caractéristiques suivantes:
- le tube d'injection comporte un diffuseur de gaz à son extrémité inférieure;
- ladite paroi latérale est pourvue d'un second orifice auquel est raccordée une soupape de sécurité;
- le tube d'injection a une longueur réglable;
- ladite source contient un mélange de sensiblement 75 à 80% d'un gaz neutre, notamment d'argon, et d'anhydride carbonique.

L'invention a encore pour objet un gaz d'inertage de liquide alimentaire, notamment de vin, pouvant être utilisé dans le procédé et le dispositif définis ci-dessus. Ce gaz d'inertage est constitué de sensiblement 75 à 80% d'argon et d'anhydride carbonique, de préférence de sensiblement 80% d'argon et 20% d'anhydride carbonique.

Un exemple de mise en oeuvre de l'invention va maintenant être décrit en regard des dessins annexés, sur lesquels :
- la Figure 1 représente schématiquement une cuve à vin équipée d'un dispositif d'inertage conforme à l'invention; et
- la Figure 2 représente à plus grande échelle, partiellement en coupe longitudinale, une partie du dispositif d'inertage.

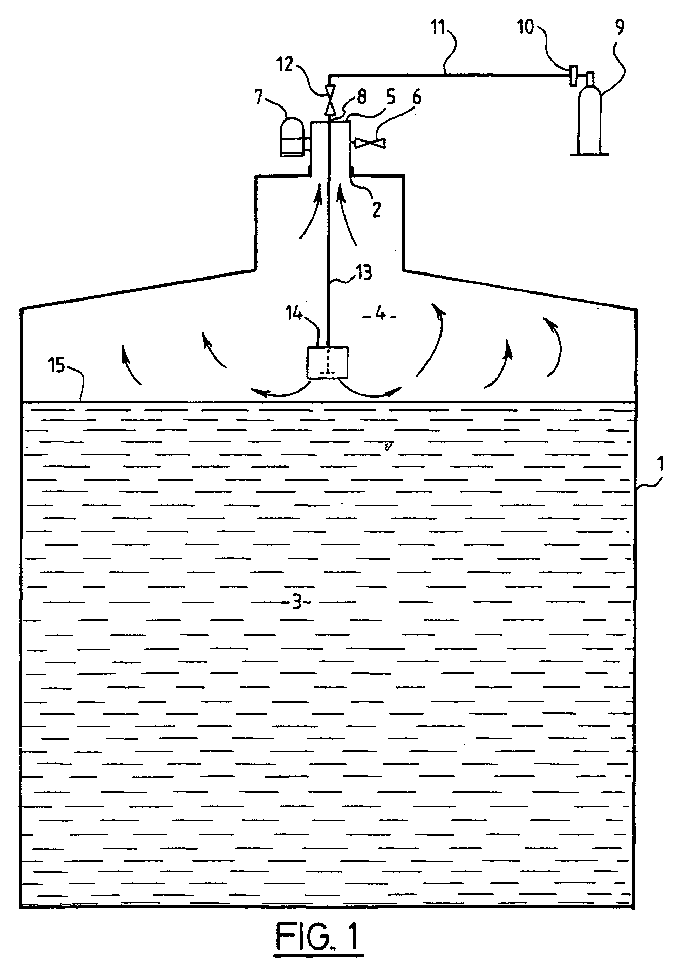

La cuve 1 schématisée sur la Figure 1, de capacité relativement grande, par exemple 150 hl, comporte dans sa partie supérieure une ouverture unique taraudée 2 normalement fermée par une trappe amovible classique de type Bellot ou analogue (non représentée). La cuve contient une masse de vin 3 à inerter laissant subsister un ciel gazeux 4, représentant par exemple quelques m³.

Dans l'ouverture 2 est vissée la partie inférieure d'un raccord 5 en polyéthylène muni latéralement d'une vanne de purge 6 et d'une soupape de sécurité 7 et supérieurement d'une entrée de gaz d'inertage 8. Cette dernière est reliée à une bouteille 9 contenant le gaz d'inertage sous pression et équipée d'un détendeur 10, via une conduite 11 pourvue d'une vanne d'arrêt 12. Le détendeur 10 est à deux étages, à savoir un premier étage abaissant la pression à environ 3 bars, et un second étage de détente à environ 20 mb (pressions relatives).

Un tube-allonge vertical 13, équipé à son extrémité inférieure d'un diffuseur de gaz 14, traverse de bas en haut le raccord 5 et se visse par son extrémité supérieure dans la partie inférieure de l'entrée de gaz 8. Comme on le voit sur la Figure 1, le diffuseur 14 est situé juste au-dessus de la surface libre 15 du vin.

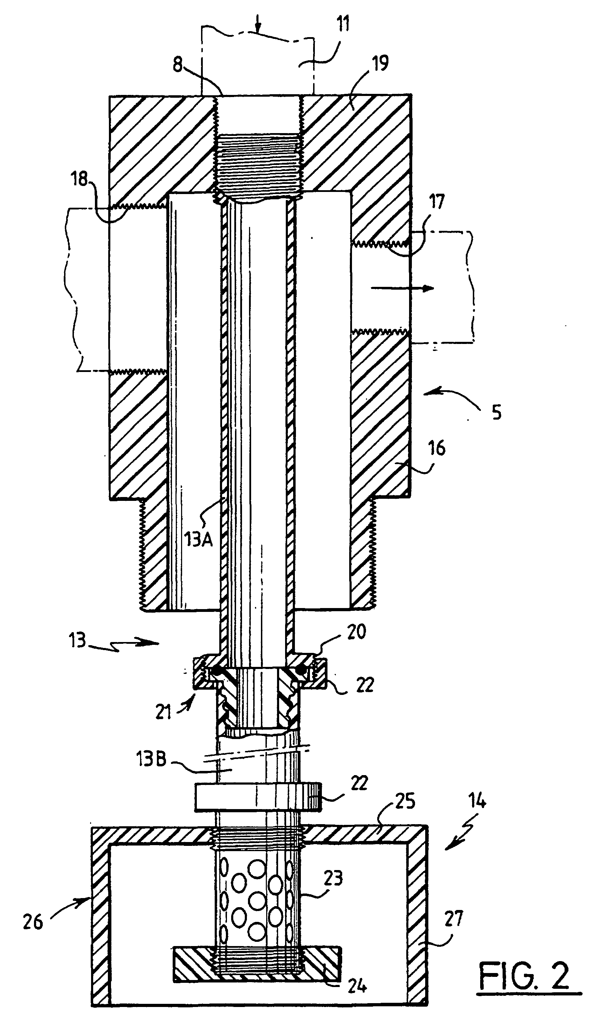

Comme on le voit plus en détail sur la Figure 2, le raccord 5 a la forme d'une coupelle renversée. Sa paroi latérale 16 est percée de deux trous diamétralement opposés 17, 18 pour le raccordement de la vanne 6 et de la soupape 7 respectivement. Son fond supérieur 19 est percé d'un trou central taraudé constituant l'entrée de gaz 8. A ce trou se raccordent par le haut la conduite 11 et par le bas l'extrémité supérieure du tube-allonge 13.

Dans l'exemple représenté, le tube-allonge 13 est réalisé en deux parties : d'une part, une partie supérieure fixe 13A en polychlorure de vinyle (PVC) vissée dans l'entrée 8 par son extrémité supérieure et dépassant vers le bas sous le raccord 5, l'extrémité inférieure de cette partie 13A étant équipée d'une collerette de raccordement filetée 20. D'autre part, une partie inférieure interchangeable 13B constituée par un tube également en PVC souple équipé à chaque extrémité d'un dispositif de raccordement 21 à écrou moleté 22.

Le diffuseur 14 est constitué d'un tube en PVC dont la partie 23 est perforée, dont l'extrémité inférieure est obturée par une plaque horizontale 24 d'aire nettement supérieure à la section du tube, et dont la partie supérieure, non perforée, est vissée à travers le fond supérieur 25 d'une cloche 26. Le tube 23 se termine, au-dessus du fond 25, par une collerette de raccordement filetée analogue à la collerette 20. La jupe 27 de la cloche 26 dépasse au-dessous de la plaque 24.

La bouteille 9 contient un mélange gazeux constitué de 80% d'argon et de 20% d'anhydride carbonique (CO₂). La soupape 7 est réglée pour s'ouvrir lorsqu'une surpression prédéterminée et lorsqu'une dépression prédéterminée sont atteintes, par exemple une surpression de 45 mb et une dépression de 5 mb. De plus, il est possible d'effectuer un prélèvement de l'atmosphère de la cuve à la vanne de purge 6 afin de mesurer la teneur en oxygène du ciel gazeux de la cuve.

En fonctionnement, la cuve étant remplie partiellement de vin dans la mesure indiquée plus haut, on ouvre les vannes 12 et 6. Le mélange argon/CO₂ pénètre alors dans la cuve à travers la conduite 11, le tube 13 et le diffuseur 14. Le débit du gaz est réglé par la surpression commandée par le détendeur 10. Cette surpression est typiquement environ 20 mb, ce qui fournit un débit de l'ordre de 200 l/mn.

En arrivant dans la cuve, le gaz perd l'essentiel de sa vitesse grâce au diffuseur 14, et il se dépose doucement sur la surface libre 15 du vin. L'accumulation du gaz sur le vin provoque un effet piston qui chasse l'air à travers la vanne 6.

On constate une diminution particulièrement rapide de la teneur en oxygène en effectuant une série d'analyses par prélèvement de l'atmosphère du ciel gazeux à la vanne de purge 6. De plus, le gaz choisi se révèle polyvalent : sa teneur en CO₂ est suffisante pour conserver la fraîcheur des vins blancs, mais suffisamment faible pour éviter, par dissolution du CO₂, un "durcissement" des vins rouges. Il s'ensuit, bien entendu, que le gaz considéré convient également pour la conservation des vins rosés.

Il est à noter que l'agencement du raccord 5, et notamment des deux passages concentriques qu'il offre à l'arrivée et à la sortie des flux gazeux, permet une utilisation optimale de la section de l'unique ouverture supérieure 2 de la cuve, et donc la mise en oeuvre de débits gazeux relativement élevés.

## Revendications

1. Dispositif d'inertage d'une cuve à liquide alimentaire, notamment à vin (1), du type comprenant une source (9) d'un gaz d'inertage plus lourd que l'air, un orifice (8) d'entrée de gaz dans la cuve relié à cette source, et un orifice (17) de purge de la cuve, ainsi qu'au moins un tube d'injection descendant (13) destiné à être relié par son extrémité supérieure à l'orifice d'entrée (8) et s'étendant jusqu'au voisinage de la surface libre (15) du liquide,
**caractérisé en ce que** la cuve est munie d'une ouverture unique (2) située en sa partie supérieure et **en ce que** le dispositif comprend un raccord tubulaire (5) adaptable sur ladite ouverture unique (2) de la cuve (1) et offrant deux passages concentriques pour l'arrivée du gaz d'inertage et l'évacuation du gaz en excès par l'orifice de purge, la partie supérieure (13A) du tube d'injection (13) étant entourée par la paroi latérale (16) du raccord tubulaire (5), paroi latérale qui est pourvue dudit orifice de purge (17).

2. Dispositif suivant la revendication 1, **caractérisé en ce que** ladite paroi latérale (16) est pourvue d'un second orifice (18) auquel est raccordée une soupape de sécurité (7).

3. Dispositif suivant la revendication 1 ou 2, **caractérisé en ce que** le tube d'injection (13) comporte un diffuseur de gaz (14) à son extrémité inférieure.

4. Dispositif suivant l'une quelconque des revendications précédentes, **caractérisé en ce que** le tube d'injection (13) a une longueur réglable.

5. Dispositif suivant l'une quelconque des revendications précédentes, **caractérisé en ce que** ladite source (9) contient un mélange de sensiblement 75 à 80% d'un gaz neutre, notamment d'argon, le complément étant de l'anhydride carbonique.

6. Procédé d'inertage d'une cuve (1) contenant un liquide alimentaire, notamment du vin, du type dans lequel on injecte dans le ciel gazeux de la cuve un gaz d'inertage plus lourd que l'air, et, pendant cette injection, on évacue le gaz en excès par un orifice de purge (17) de la cuve, le gaz d'inertage étant injecté dans la cuve nettement au-dessous de la paroi supérieure de la cuve et au voisinage de la surface libre (15) du liquide,
**caractérisé en ce que** :
- la cuve est munie d'une ouverture unique (2) située en sa partie supérieure ;
- on injecte le gaz d'inertage au moyen d'un tube d'injection descendant (13) relié par son extrémité supérieure à ladite ouverture unique (8) et s'étendant jusqu'au voisinage de la surface libre (15) du liquide ; et
- on dispose d'un raccord tubulaire (5) adaptable sur ladite ouverture unique (2) de la cuve (1)et offrant deux passages concentriques pour l'arrivée du gaz d'inertage et l'évacuation du gaz en excès par l'orifice de purge, la partie supérieure (13A) du tube d'injection (13) étant entourée par la paroi latérale (16) du raccord tubulaire (5), paroi latérale qui est pourvue dudit orifice de purge (17).

7. Procédé selon la revendication 6, **caractérisé en ce que** l'on réduit la vitesse de déplacement du gaz d'inertage au voisinage de la surface libre (15) du liquide, juste avant son injection.

8. Procédé suivant la revendication 6 ou 7, **caractérisé en ce qu'**on mesure la teneur en oxygène dans le ciel gazeux de la cuve (1), et on arrête l'injection lorsque cette teneur est inférieure ou égale à une valeur maximale prédéterminée.

9. Procédé suivant l'une quelconque des revendications 6 à 8, **caractérisé en ce qu'**on utilise un gaz d'inertage contenant sensiblement 75 à 80% d'un gaz neutre, notamment d'argon, et le complément d'anhydride carbonique.

## Claims

1. Apparatus for placing under inert atmosphere a beverage container, particularly a wine container (1), of the type comprising a source (9) of an inerting gas heavier than air, an orifice (8) connected to this source, for letting gas into the container, and an orifice (17) for purging the container, and also at least one downward injection tube (13) intended to be connected via its upper end to the inlet orifice (8) and extending to near the free surface (15) of the liquid,
**characterized in that** the container is provided with a single opening (2) in its upper part and **in that** the apparatus comprises a tubular connector (5) that can be fitted on to said single opening (2) of the container (1) and providing two concentric passages for the inlet of the inerting gas and the removal of the excess gas via the purge orifice, the upper part (13a) of the injection tube (13) being enclosed by the side wall (16) of the tubular connector (5), said side wall being provided with said purge orifice (17).

2. Apparatus according to Claim 1, **characterized in that** the said side wall (16) is provided with a second orifice (18) to which a safety valve (7) is connected.

3. Apparatus according to Claim 1 or 2, **characterized in that** the injection tube (13) has a gas diffuser (14) at its lower end.

4. Apparatus according to any one of the preceding claims, **characterized in that** the injection tube (13) has an adjustable length.

5. Apparatus according to any one the preceding claims, **characterized in that** said source (9) contains a mixture of substantially 75 to 80% of a neutral gas, in particular argon, the remainder being carbon dioxide.

6. Process for placing under inert atmosphere a container (1) containing a beverage, particularly wine, of the type in which an inerting gas heavier than air is injected into the gas overhead of the container and, during this injection, the excess gas is removed through a purge orifice (17) of the container, the inerting gas being injected into the container substantially below the upper wall of the container and close to the free surface (15) of the liquid,
**characterized in that**:
- the container is provided with a single opening (2) in its upper part;
- the inerting gas is injected via a downward injection tube (13) connected via its upper end to said single opening (2) and extending to near the free surface (15) of the liquid; and
- there is a tubular connector (5) that can be fitted on to said single opening (2) of the container (1) and providing two concentric passages for the inlet of the inerting gas and the removal of the excess gas via the purge orifice, the upper part (13a) of the injection tube (13) being enclosed by the side wall (16) of the tubular connector (5), said side wall being provided with said purge orifice (17).

7. Process according to Claim 6, **characterized in that** the velocity of the inerting gas close to the free surface (15) of the liquid is reduced just before it is injected.

8. Process according to Claim 6 or 7, **characterized in that** the oxygen level in the gas overhead of the container (1) is measured, and the injection is stopped when this level is less than or equal to a predetermined maximum value.

9. Process according to any one of Claims 6 to 8, **characterized in that** use is made of an inerting gas containing substantially 75 to 80% of an inert gas, in particular argon, the remainder being carbon dioxide.

## Patentansprüche

1. Einrichtung zum Einbringen eines Inertgases in einen Behälter für Lebensmittelflüssigkeit, insbesondere für Wein (1), umfassend eine Quelle (9) eines Inertgases, das schwerer ist als Luft, eine Gaseinlassöffnung (8) in dem Behälter, die mit dieser Quelle verbunden ist, und eine Ablassöffnung (17) im Behälter, sowie mindestens ein absteigendes Einspritzrohr (13), das mit seinem oberen Ende für den Anschluss an die Einlassöffnung (8) bestimmt ist und das sich bis in die Nähe der freien Oberfläche (15) der Flüssigkeit erstreckt,
**dadurch gekennzeichnet, dass** der Behälter mit einer einzigen Öffnung (2) versehen ist, die sich in seinem oberen Abschnitt befindet, und dass die Einrichtung eine rohrförmige Verbindung (5) umfasst, die sich an die einzige Öffnung (2) des Behälters (1) anpassen lässt und die zwei konzentrische Durchgänge für das Zuführen des Inertgases und für das Abführen des überschüssigen Gases durch die Ablassöffnung bereitstellt, wobei der obere Abschnitt (13A) des Einspritzrohrs (13) von der Seitenwand (16) der rohrförmigen Verbindung (5) umgeben ist, in welcher Seitenwand sich die Ablassöffnung (17) befindet.

2. Einrichtung nach Anspruch 1, **dadurch gekennzeichnet, dass** die Seitenwand (16) mit einer zweiten Öffnung (18) versehen ist, an die ein Sicherheitsventil (7) angeschlossen ist.

3. Einrichtung nach Anspruch 1 oder 2, **dadurch gekennzeichnet, dass** das Einspritzrohr (13) an seinem unteren Ende einen Gasverteiler (14) umfasst.

4. Einrichtung nach einem der vorhergehenden Ansprüche, **dadurch gekennzeichnet, dass** das Einspritzrohr (13) eine regulierbare Länge hat.

5. Einrichtung nach einem der vorhergehenden Ansprüche, **dadurch gekennzeichnet, dass** die Quelle (9) ein Gemisch aus im Wesentlichen 75 bis 80% eines neutralen Gases, insbesondere Argon, und als Rest Kohlensäureanhydrid enthält.

6. Verfahren zum Einbringen eines Inertgases in einen Behälter (1), der eine Lebensmittelflüssigkeit, insbesondere Wein, enthält, von dem Typ, bei dem man in den Kopfgasraum des Behälters ein Inertgas einspritzt, das schwerer ist als die Luft, und man während dieses Einspritzens das überschüssige Gas über eine Ablassöffnung (17) des Behälters abführt, wobei das Inertgas deutlich unterhalb der oberen Wand des Behälters und in der Nähe der freien Oberfläche (15) der Flüssigkeit in den Behälter eingespritzt wird,
**dadurch gekennzeichnet, dass**:
- der Behälter mit einer einzigen Öffnung (2) versehen ist, die sich in seinem oberen Abschnitt befindet;
- man das Inertgas mit Hilfe eines absteigenden Einspritzrohrs (13), das mit seinem oberen Ende mit der einzigen Öffnung (2) verbunden ist und sich bis in die Nähe der freien Oberfläche (15) der Flüssigkeit erstreckt, einspritzt; und
- man über eine rohrförmige Verbindung (5) verfügt, die sich an die einzige Öffnung (2) des Behälters (1) anpassen lässt und die zwei konzentrische Durchgänge für das Zuführen des Inertgases und das Abführen des überschüssigen Inertgases durch die Ablassöffnung bereitstellt, wobei der obere Abschnitt (13A) des Einspritzrohrs (13) von der Seitenwand (16) der rohrförmigen Verbindung (5) umgeben ist, welche Seitenwand mit der Ablassöffnung (17) versehen ist.

7. Verfahren nach Anspruch 6, **dadurch gekennzeichnet, dass** man die Bewegungsgeschwindigkeit des Inertgases in der Nähe der freien Oberfläche (15) der Flüssigkeit kurz vor dem Einspritzen reduziert.

8. Verfahren nach Anspruch 6 oder 7, **dadurch gekennzeichnet, dass** man den Sauerstoffgehalt in dem Kopfgasraum des Behälters (1) misst und man das Einspritzen stoppt, wenn dieser Gehalt unter oder gleich einem vorbestimmten Höchstwert ist.

9. Verfahren nach einem der Ansprüche 6 bis 8, **dadurch gekennzeichnet, dass** man ein Inertgas verwendet, das im Wesentlichen 75 bis 80% eines neutralen Gases, insbesondere Argon, und als Rest Kohlensäureanhydrid enthält.
